(19) Europäisches Patentamt
European Patent Office
Office européen des brevets

(11) **EP 3 493 351 A1**

(12) **EUROPEAN PATENT APPLICATION**
published in accordance with Art. 153(4) EPC

(43) Date of publication:
**05.06.2019 Bulletin 2019/23**

(51) Int Cl.:
***H02J 3/01*** (2006.01)

(21) Application number: **16909755.7**

(86) International application number:
**PCT/CL2016/000041**

(22) Date of filing: **29.07.2016**

(87) International publication number:
**WO 2018/018169 (01.02.2018 Gazette 2018/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Veloso Arancibia, Luis Alejandro**
**2521002 Vina del Mar (CL)**

(72) Inventor: **Veloso Arancibia, Luis Alejandro**
**2521002 Vina del Mar (CL)**

(74) Representative: **Cueto, Sénida**
**SP3 Patents S.L.**
**Los Madroños, 23**
**28891 Velilla de San Antonio (ES)**

(54) **DEVICE THAT ABSORBS ZERO-SEQUENCE HARMONICS IN LOW-VOLTAGE ELECTRICITY DISTRIBUTION NETWORKS**

(57)    The invention relates to a device, autotransformer and system for eliminating zero-sequence harmonics for unbalanced three-phase systems with non-linear loads, which comprises a siliceous steel core reinforced with plates for reducing losses caused by eddy currents; terminals in terminal blocks suitable for each value of current and a metal cabinet with forced ventilation and an air louvre suitable for the heat to be evacuated, the siliceous steel core comprising three C-shaped legs disposed one in front of the other one at 120° intervals, forming a three-pointed star; three windings of copper insulated according to the power or current circulating through the windings, with taps for making the phase connections or crossings. According to the invention, the distribution of fluxes being distributed in the three legs of the siliceous steel core in a proportion of 50% in the first leg, 25% in the second leg and 25% in the third leg, for each phase, the polarity of the second and third legs being reversed, causing the fluxes in the second and third legs to be summed with a sign opposite to that of the flux of the first leg, giving a result of zero. The current through the neutral is thereby absorbed and the residual current is re-injected into the phases in a balanced manner

**FIG. 1**

**Description**

**Field of the invention**

The present invention relates to electrical power systems, more specifically to a three-phase autotransformer that absorbs harmonics of zero sequence, in low-voltage electricity distribution networks.

**Background of the Invention**

The electrical systems knew only three types of loads: inductive, capacitive and resistive. These loads respond linearly to a sinusoidal excitation with the peculiarity of advancing or delaying 90°, depending on their capacitive or inductive condition, the current signal consumed by said loads. In the case of resistive loads, these act only affecting the amplitude of the sinusoidal one, without affecting its phase angle.

With the inclusion of the power electronics to the electrical systems, a new behavior was detected in the current, consisting in that it not only changed its phase angle but also its wave form was absolutely affected. This phenomenon is called harmonic distortion.

A load is considered non-linear if its impedance changes with the applied voltage, i.e., as the amplitude of the voltage changes, the impedance of the load takes different values that are repeated periodically. These changes bring, as a consequence, that the current is not sinusoidal, even when the applied voltage is.

These non-sinusoidal currents contain harmonic currents that interact with the rest of the electrical system and that generate distorted voltages which can affect the distribution bars of the system and the equipment connected to them. Nowadays, with the changes in technology and the proliferation of the use of electronics, automatic control, digital systems, among others, the problems with harmonic distortion have grown unsuspectedly due to the types of existing non-linear loads. These symptoms are seen not only in the industry but everywhere, as well as commerce, clinics, malls and buildings.

One of the most common non-linear loads are switching power supply, cycloconverters, rectifiers, controllers, variable frequency drives (VFD), computers, lighting equipment with electronic ignition, etc., but for practical purposes the non-linear loads will be divided into two types:

a) The zero-sequence harmonic generating loads are those that consume non-sinusoidal currents that generate harmonics that obey the following formula:

$$\text{Harmonic number} = (6n - 3),$$

wherein n goes from 1 to infinity. That is, the following harmonics will be present: 3, 9, 15, 21, 27, 33, 39, 45, ...

b) Pulse harmonic generating loads are those loads that work on a pulse basis and consume non-sinusoidal currents that generate harmonics that obey the following formula:

$$\text{Harmonic number} = (k * n + 1),$$

wherein n is the number of pulses of the load (it can be 6 pulses or 12 pulses) and k is a constant of cycle that goes from 1 to infinity. That is, for a VFD of 6 pulses, we will have the following harmonics: 5, 7, 11, 13, 17, 19, 23, 25, 29, 31, 35, 37, 41, 43, 47, 49, ...

The manufacturers of frequency inverters of induction motors explain how this equipment improves the efficiency of the machines allowing for varying the speed of operation according to the requirements of the application, but they warn that it produces harmonics of order 5, 7, 11 and 13.

The electronic ballasts are also presented as an important improvement, both for efficiency and for the useful life of the equipment. They only have the small problem of the increase in harmonic content.

Equipment such as arc furnaces, battery chargers and UPSs are also producers of harmonics. However, the biggest cause of problems are groups of small single-phase electronic loads, such as computers, printers, photocopiers, faxes, etc., connected between phase and neutral, generally in a triangle-star 380/220 system. In 1994, the percentage of non-linear loads was 15% and by 2020 it has been estimated at 80%.

The problems generated by non-linear loads are related to the power factor, which is measured as the ratio between the active power "P" (Watts) and the apparent power "S" (VA) consumed by the system. This, traditionally for conventional loads, was equal to the voltage and current phase angle ratio (cos $\varphi$) due to the simplification of the power formula. But nowadays, there is an energy that is used to supply the harmonic currents required by the system. This new power is called "D" (VAd), wherein the ratio of the power factor is affected by component D.

Another problem generated by non-linear loads is related to the systems by losses and currents through the neutral. Many electrical systems can accommodate certain low levels of total harmonic distortion (THD), and thanks to that there are recommended levels for voltage distortion (THD-V <5%) and current (THD-I <8 %), these recommendations are suggested to be followed to avoid problems in their systems.

The most common problems are:

- Heating of the transformers due to the circulation of harmonic currents through their windings.
- Overload of the circuits, which increases system losses.
- Decrease in the useful life of the capacitors.
- Resonance in the system due to the circulation of harmonics.
- Vibration in the engines and wear in their bearings.
- Loss of information in the computer equipment.
- Erratic operations of control and protection equipment.

But undoubtedly, the biggest problem generated by the zero-sequence harmonics (and that is why they are called by this name) is that they circulate through the neutrals of the systems, generating the subsequent problems: noise, losses, heating, residual voltage, operation of protections, raising of the potential of the neutral with respect to earth, opposite torque in the motors and overheating in the delta connections of the transformers.

As in any problem, the best solution to avoid an effect is not to mitigate it, but to eliminate the cause that produces it. However, nowadays the most used systems to mitigate the effect of harmonics are passive filters, the most popular built on the basis of capacitors and inductances adjusted to block or absorb certain harmonics. The applications in which they are used must be studied with care to ensure their compatibility with the rest of the system. They can become excessively bulky and create undesirable effects as transients and resonances; the active filters, with sophisticated electronic systems begin appear in the market, but they are expensive, delicate and do not enjoy full acceptance. There are also applications with some types of transformer connection, such as the triangle-star transformers, since the triplen currents (or zero sequence) are added in the neutral conductor together with the residual currents, but this generates the problem that, in the primary, the triplen of the unbalanced loads get out through the conductors and those of the balanced loads are trapped in the windings of the triangle. Although this could be used to eliminate the balanced triplen on the primary side, it is only valid in certain applications due to the problems generated by the recirculation through the triangle of said currents (considerable increase of transformer losses and overheating of the equipment). The transformers with secondary in zig-zag are formed by six equal windings, two per phase. This arrangement diverts the triplen from the neutral to the phase conductors; transformers with multiple outputs, for example double output transformers, are built with two secondary windings displaced 30 degrees. The primary connected in triangle blocks the triplen of balanced loads. The secondary ones compensate especially the harmonics of order 5, 7, 11, 19. Another possible configuration is the quadruple output in which the windings are displaced 15 degrees. The primary, as always, blocks the triplen and the secondary those of order 5, 7, 11, 13, 17, 19, 29 and 31.

To maximize the attenuation of these harmonics, the non-linear loads connected in each output must be identical. Therefore, in these applications, the outputs of the different circuits are usually monitored. However, it is not recommended, for example, a double-star transformer loaded with three output cabinets because the measurements do not reflect whether the secondaries are balanced.

The closest state of the art document that can be found is the patent CL 47154 (200701057) dated 21/02/2011, from the same inventor of the present invention, Luis Veloso Arancibia, incorporated as reference, entitled "Device , System and Transformer suppressor of zero sequence harmonics (SAC), for unbalanced three-phase systems with non-linear loads", it describes a system, a device and a transformer that aims to transform itself into a very low impedance for the triplen harmonics and, that, by means of its connection, it is able to cancel the currents when connecting the phases to a specific electrical point or common neutral. Moreover, it is capable of redistributing residual currents in the electricity grid, which allows us for balancing a system. It aims to reduce the current through the neutral and zero-sequence harmonics in an unbalanced system, redistributing the current in a homogeneous way through the three phases of the system. This behavior is achieved by counterposing the rotation direction of the magnetic fluxes induced in the core by each phase, giving a mathematical zero only in the fluxes that have the same phase angle (that is why it only occurs with in-phase currents). Now, the impedance value of each phase is formed by the number of turns (windings) of each coil and the reluctance of the core.

Patent application CL 1215-2014, dated 08/05/2014, from the same inventor of the present application Mr. Luis Veloso Arancibia, incorporated as reference, entitled "Rectified single-phase electromagnetic induction reactor that absorbs residual currents thrown by the lighting systems and solid-state electronics propagated through the neutral wires", describes a reactor that comprises three single-phase grain-oriented siliceous steel cores and three multi-wire copper windings isolated, according to the power or current flowing through said windings, with outputs to a half-bridge rectifier that injects current into the phases. Moreover, the fluxes of said single-phase cores are opposed in a single central leg canceling the resultant flux to generate a minimum impedance, but not with exact contraposition, so as not to annihilate the zero sequence but to reinject it through the phases, absorbing the currents through the neutral and balancing the zero-sequence harmonic components from the source to the load. The reactor has terminals in terminal blocks suitable for each current value and a metal cabinet, with forced ventilation and lattice suitable for the heat to be evacuated, provided with an electronic measurement system using toroid current transformers to measure and control the current reinjected into the system.

However, the type C core of the present invention arranged frontally among the three phases, but shifted 120 ° with respect to each phase, achieves that the reluctance of each phase be exactly the same as the others and it is guaranteed that the distribution of the currents be homogeneous. In this way it is also possible to have equipment that can be installed in parallel to a distribution transformer in the same low-voltage line of the network, absorbing the harmonics of all the users of the network and cleaning the circuit for any user. It is a global application to the problem, not individualized to each user.

Installing this autotransformer in the networks avoids the propagation of the zero-sequence currents through the neutrals, improving the quality of the energy and the efficiency of the distribution system. And thanks to its connection, it has no voltage phase difference, as it is the case with the coils connected in zigzag.

## SUMMARY OF THE INVENTION

The present invention provides a core autotransformer distributed in three legs arranged one in front of the other one at 120 ° forming a three-pointed star. In this way, we have three equal reluctances and the mutual inductances between them are also homogeneous. With this arrangement a very low impedance is achieved for the triplen harmonics and, through the crossing of phases, it is possible to absorb the currents when connecting the phases to a specific electrical point or common neutral. At the same time, due to its homogeneous core, the correct distribution of residual currents in the electrical network is guaranteed, which allows the balancing of a system. Thus, it is intended to decrease the current through the neutral and zero-sequence harmonics in an unbalanced system, redistributing the current in a homogeneous way through the three phases of the system.

## BRIEF DESCRIPTION OF THE FIGURES

Figure 1 shows a schematic of the physical structure of the zero-sequence harmonic absorption autotransformer of the present invention.

Figure 2 shows a phasor diagram of the voltages of each phase, where they retain their original phase angle of 30 ° with respect to the delta of the transformer and 0 ° with respect to the star, which allows us for connecting the coil in parallel to any point of the power distribution network.

Figure 3 shows an application scheme of the invention to an electrical distribution system domiciliary, with non-linear loads.

## DETAILED DESCRIPTION OF THE INVENTION

The present invention consists of an autotransformer (1) of absorption of harmonics of zero sequence, comprising: a core of siliceous steel reinforced with plates to decrease the losses caused by eddy currents with three legs in a C-shape arranged one in front of the other one oriented with 120 ° of difference to each other forming a three-pointed star; insulated copper windings according to the power (or current) circulating in said windings, the latter have taps (outputs) to make the connections or crossings of phases; terminals in terminal blocks suitable for each current value, in addition, these connection points are identified with the phases and the neutral of the system; a metal cabinet with forced ventilation (for high powers) and lattice, suitable for the heat to be evacuated. This cabinet must have the level of robustness and impermeability that is required, depending on the environment in which the equipment is installed.

The autotransformer (1) of absorption of zero-sequence harmonics of the present invention is, basically, an electromagnetic reactor whose objectives are to transform itself into a very low impedance for triplen harmonics and, by means of its connection and the geometric arrangement of its legs, be able to cancel the currents when connecting the phases to a specific electrical point or common neutral. Moreover, it is capable of redistributing the residual currents in the electrical network, which allows us for keeping balanced the system that has non-linear loads.

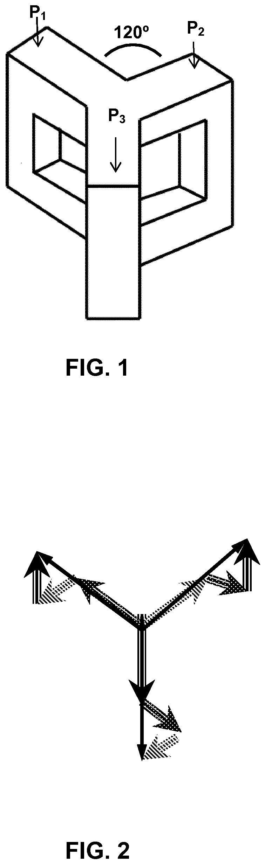

As shown in Figure 1 and Figure 2, the cancellation of the phases occurs in the legs of the autotransformer (1) of zero-sequence harmonic absorption, since it faces the fluxes of the three phases together, generating a resultant flux equal to zero or minimum, which at the same time is equal in each leg because the reluctance of the core is exactly the same for the three phases.

The distribution of fluxes is mathematically distributed in the three legs ($P_1$, $P_2$, $P_3$) of the core in a ratio of 50% in the first leg ($P_1$), 25% in the second leg ($P_2$) and 25% in the third leg ($P_3$). In these second and third legs, the polarity is reversed, which generates the fluxes are added with opposite sign and that the final result of the sum of the three fluxes, 50% - 25% - 25%, be zero. This is achieved by applying Lenz's Law to determine the winding direction in the construction of the reactor windings and consists in winding the conductor around a leg of the core up to 50% of the extension of the leg, in this case in the first leg ($P_1$), or with N turns (windings), then changing to the next leg, in this case the second leg ($P_2$), and winding in the opposite direction up to 25% of the size of that leg, or N / 2 turns and then changing to the third leg (P3) and winding in the same way (same direction and amount) until completing the 25% of the third leg or N / 2 turns. This operation is done with three conductors, designating one for each leg, and ends with the three conductors joined at their final end, as shown in Figure 1. When making this connection, a very special phenomenon is obtained with the resultant fluxes in the reactor of the present invention (see figure 2), where each phase is composed of the sum of the fluxes of the three phases. It is important to achieve an ideal balance of the currents, since the three are mixed together. Now, by connecting this reactor in parallel to the unbalanced non-linear loads, a minimum impedance is generated for the zero-sequence currents, absorbing the current through the neutral and reinjecting the residual current to the phases in a balanced way, since the equivalent impedance of the reactor is the same for all three phases, thus the current through the neutral is eliminated and redistributed.

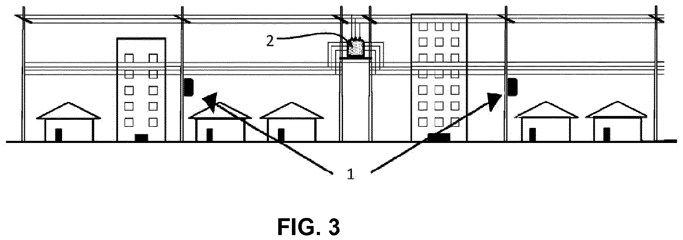

As shown in Figure 3, the autotransformer (1) of zero-sequence harmonic absorption of the present invention is connected in parallel to a distribution transformer (2) that feeds the non-linear loads, between the neutral of the system and the three phases of the distribution network. The reactor allows for dimming the voltage variations of the network, as well as for balancing the currents, since it behaves as a bypass for the transformer with respect to the loads, for the circulation of the harmonic currents of zero sequence.

To demonstrate this effect, the following table is shown with the following tests:

**Table 1: Laboratory test. Non-linear three-phase system, 10 KVA, 380 Volts L-L, 220 Volts L-N.**

| Currents | | Test 1 Balanced Loads without Coil | Test 2 Balanced Loads with Coil | Test 3 Unbalanced Loads without Coil | Test 4 Unbalanced Loads with Coil |
|---|---|---|---|---|---|
| I phase R | Amperes | 24 | 24 | 12 | 12,2 |
| | THD - I | 34% | 6,9% | 45% | 12% |
| I phase S | Amperes | 24 | 24 | 23,9 | 23,8 |
| | THD - I | 35% | 5,7% | 35% | 11% |
| I phase T | Amperes | 23,8 | 23,8 | 23,8 | 23,8 |
| | THD - I | 34% | 8,1% | 34% | 12% |
| I Neutral | Amperes | 24,1 | 4,1 | 36,7 | 3,9 |
| Power factor | | 0,91 | 0,94 | 0,89 | 0,93 |
| THD-I: Harmonic distortion of the current. | | | | | |

Table 1 shows four different tests: two with balanced loads, with and without the device of the invention connected, and two with unbalanced loads, with and without the device of the invention connected. The magnitude of the current through the neutral can be appreciated when the absorption autotransformer is connected ("test 2" column), which reaches an equivalent value at less than 20% of its value under normal conditions. At the same time, it can be seen that in an unbalanced system, the mere fact of connecting the equipment (column "test 4"), allows for generating the same effect, regardless of the level of imbalance of the phases.

**Claims**

1. Zero-sequence harmonic suppressor device for unbalanced three-phase systems with non-linear loads, comprising a core of siliceous steel reinforced with plates to decrease the losses caused by eddy currents; terminals in terminal blocks suitable for each value of current and a metal cabinet with forced ventilation and lattice, suitable for the heat to be evacuated where said core of siliceous steel comprises three legs in the form of C arranged one in front of the other one oriented with 120 ° of difference to each other forming a three-pointed star; three insulated copper windings according to the power or current flowing through said windings, with outputs to make the connections or phase crossings, where the distribution of fluxes is distributed in the three legs of the siliceous steel core in a ratio of 50% in the first leg, 25% in the second leg and 25% in the third leg, for each phase, where the polarity of said second and third legs is reversed, generating that the fluxes, in said second and third legs, are added with sign opposite to the flux of the first leg and that the result be zero, with a minimum impedance for the zero-sequence currents, absorbing the current through the neutral and reinjecting the residual current to the phases in a balanced way.

2. The zero-sequence harmonic suppressor device according to claim 1, wherein the first winding is wound on a first leg with N turns - windings -, continuing its winding on the second leg, then a second winding that is wound on said second leg with N / 2 turns in said second winding, in the opposite direction to the winding of the first leg and continuing its winding in the third leg, continuing its winding in the third leg with N / 2 turns in said third winding, in the same direction to said second winding and in the opposite direction to the winding of the first leg; where the initial conductors of each winding correspond to the connection of each phase of a three-phase star system and the terminal conductors of the windings are joined forming the neutral of the three-phase star system.

3. A zero-sequence harmonic suppressor autotransformer for unbalanced three-phase systems with non-linear loads, comprising a primary three-phase winding, and a secondary winding in star that is composed of three insulated copper windings according to the power or current flowing through said windings, wherein the first winding is wound in a first leg with N turns - windings -, continuing its winding in the second leg, then a second winding that is wound in said second leg with N / 2 turns in said second winding, in the opposite direction to the winding of the first leg and continuing its winding in the third leg, continuing its winding in the third leg with N / 2 turns in said third winding, in the same direction to said second winding and in the opposite direction to the winding of the first leg; where the initial conductors of each winding correspond to the connection of each phase of the winding in star and the terminal conductors of the windings are joined forming the neutral of the winding in star.

4. A zero-sequence harmonic suppression system for unbalanced three-phase systems with non-linear loads, with a three-phase autotransformer with unbalanced non-linear load, which has star-connected a zero-sequence harmonic suppression device to its secondary, which comprises a secondary winding in star that is composed of three insulated copper windings according to the power - or current - circulating in said windings, where the first winding is wound on a first leg with N turns - windings -, continuing its winding on the second leg, then a second winding that is wound in said second leg with N / 2 turns in said second winding, in the opposite direction to the winding of the first leg and continuing its winding in the third leg, continuing its winding in the third leg with N / 2 turns in said third winding, in the same direction to said second winding and in the opposite direction to the winding of the first leg; where the initial conductors of each winding correspond to the connection of each phase of a three-phase star system and the terminal conductors of the windings are joined forming the neutral of the three-phase star system.

**FIG. 1**

**FIG. 2**

**FIG. 3**

<div align="center">INTERNATIONAL SEARCH REPORT</div>

| | | International application No. |
| | | PCT/CL2016/000041 |

| A. | CLASSIFICATION OF SUBJECT MATTER |
| | (CIP) H02J3/01 (2017.01) |
| | According to International Patent Classification (IPC) or to both national classification and IPC |

| B. | FIELDS SEARCHED |
| Minimum documentation searched (classification system followed by classification symbols) |
| (CIP) H02J3/00, 3/01, H02M1/00; (CPC) H02M2001/123 |
| Documentation searched other than minimum documentation to the extent that such documents are included in the fields searched |
| Electronic data base consulted during the international search (name of data base and, where practicable, search terms used) |
| EPOQUE, THOMSON, GOOGLE, ESP@CENET, INAPI |

| C. | DOCUMENTS CONSIDERED TO BE RELEVANT |

| Category* | Citation of document, with indication, where appropriate, of the relevant passages | Relevant to claim No. |
| --- | --- | --- |
| X<br>Y | CL 200701057 A (ARANCIBIA, L.) 13 February 2009<br>page 8, paragraph 2, claims 1-4. | 3-4<br>1-2 |
| Y | US 20030206087 A1 (SQUARE D COMPANY)<br>6 November 2003<br>[0017], [0018]; figures 3-5 | 1-2 |
| A | WO 2013120218 A1 (IND ALTERNA LGM SPA)<br>22 August 2013<br>page 7, lines 20-25, pages 8, lines 4-5, claim 1, figure 1 | |
| A | KR 2013020712 A (KIM, N. U.) 27 February 2013.<br>page 2, paragraphs 1-3 ([0001]-0003]); page 4, paragraph 4<br>([0023]); page 5, paragraph 6 - page 6, paragraph 2<br>([0040]-[0003]); figure 3. | |
| A | KR 2013036264 A (KIM, N. U.) 11 April 2013.<br>page 2, paragraphs 2-3 ([0002]-0003]); page 6,<br>paragraph 2-8 ([0044]-[0050]); figure 3. | |

| ☐ | Further documents are listed in the continuation of Box C. | ☒ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" | document member of the same patent family |

| Date of the actual completion of the international search | Date of mailing of the international search report |
| 20/01/2017 | 22/03/2017 |

| Name and mailing address of the ISA/<br>Av. Libertador Bernardo O'Higgins 194,<br>Piso 17, Santiago, Chile | Authorized officer<br>ARAYA LARA, Hugo Boris |
| Facsimile No. | Telephone No. 56-2-28870550 56-2-28870551 |

Form PCT/ISA/210 (second sheet) (January 2015)

INTERNATIONAL SEARCH REPORT
Information on patent family members

International application No.

PCT/CL2016/000041

| CL 200701057 (A) | 13-02-2009 | NONE | |
| US 20030206087 (A1) | 06-11-2003 | NONE | |
| WO 2013120218 (A1) | 22-08-2013 | NONE | |
| KR 2013020712 (A) | 27-02-2013 | KR 1398596 (B1) | 27-05-2014 |
| KR 2013036264 (A) | 11-04-2013 | KR 1398599 (B1) | 28-05-2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CL 47154200701057
- CL 12152014